# EUROPEAN PATENT SPECIFICATION

(11) **EP 3 806 694 B1**
(45) Date of publication and mention of the grant of the patent: **24.04.2024**
(21) Application number: 19733683.7
(22) Date of filing: 14.06.2019
(51) Int. Cl.: A46B 9/04, A46B 3/00, A46B 3/08, A46B 3/20, A46D 3/00, A46D 3/04, A46B 5/00, B29C 45/00, B29C 45/26, B29C 45/56, B29L 31/42

(54) **TOOTHBRUSH HANDLE, TOOTHBRUSH AND METHODS OF MANUFACTURING**
ZAHNBÜRSTENGRIFF, ZAHNBÜRSTE UND HERSTELLUNGSVERFAHREN
MANCHE DE BROSSE À DENTS, BROSSE À DENTS ET PROCÉDÉS DE FABRICATION

(30) Priority: 14.06.2018 SE 1850731
(43) Date of publication of application: 21.04.2021
(73) Proprietor: Tepe Munhygienprodukter AB, 213 76 Malmö (SE)
(72) Inventor: DINGIZIAN, Alexander, 212 45 Malmö (SE)
(74) Representative: Ström & Gulliksson AB
(86) International application number: PCT/EP2019/065639
(87) International publication number: WO 2019/238906

(56) References cited:
- WO-A1-2013/159799
- WO-A1-2018/079610
- WO-A1-2018/089610
- US-A1- 2010 113 698
- US-A1- 2014 352 093

## Description

### Field of invention

The invention relates to a method of manufacturing a toothbrush handle. The invention also relates to a method of manufacturing a toothbrush. The invention also relates to a toothbrush handle. The invention also relates to a toothbrush.

### Technical Background

Toothbrushes of today are typically produced by injection moulding a polymer into a mould having the desired shape of the toothbrush. Since toothbrushes typically is a disposable product there has been various attempts in addressing different environmental concerns. One environmental issue often discussed is the carbon footprint produced by a product over its life cycle.

According to one attempt to address environmental concerns the company TIO has developed a divisible toothbrush of which the handle has been produced using a what is said to be a durable bio polyethylene material made from sugarcane and the bristle supporting portion or head being exchangeable and made of what is said to be a cellulose acetate aka wood from FSC certified plants. The design of the toothbrush is disclosed in DE 20 2015 002 964 U1. However, this is not a satisfactory solution. It is difficult to keep such a toothbrush clean. There is e.g. a risk that bacteria can grow in the deep cavity in the gripping portion, into which cavity a protrusion of the exchangeable head is to be inserted to provide the connection of the head to the gripping portion. This is especially non-desired considering that the gripping portion is the one part that is to be kept for a longer period while the head with the bristles is exchanged to new ones a number of times.

Other attempts made by others involve using wood, bamboo, etc. in the toothbrush handle. However, such designs are cumbersome to manufacture. The above mentioned toothbrush disclosed in DE 20 2015 002 964 U1 is also cumbersome to manufacture.

WO 2018/089610 discloses in one embodiment of the injection molded article, the polymer based resin further comprises at least one property chosen from: flexural modulus of greater than 1900 MPa as measured according to ASTM 0790 using a 3.2 mm thick bar hat has been subjected to 50% relative humidity for 48 hours at 23°C; a notched izod impact strength of greater than 80 J/m as measured according to ASTM 0256 using a 3.2 mm thick bar hat has been subjected to 50% relative humidity for 48 hours at 23°C; a flex creep deflection of less than 12 mm, measured using a molded bar having dimensions of 5" length, 0.5" width, and 0.125" thickness positioned horizontally on a fixture with a 4" span, inside a dry oven for 68 hours at 90°C with a nominal 500 psi stress on the center of the span; a transmission of at least 70 measured according to ASTM 01003 using a 3.2 mm plaque after injection molding at a barrel set point of 249°C and a residence time of 5 min; a L1E value of less than 25, using a 3.2 mm plaque after injection molding with a barrel temperature of 249°C and a residence time of 5 min; or an L * color of at least 85, measured according to ASTM E1348 using a 3.2 mm plaque after injection molding with a barrel temperature of 249°C and a residence time of 5 min. In embodiments, the polymer-based resin comprises at least 2, or at least 3 of the listed properties. It is mentioned that the "new carbon" content in the cellulose based plastics used in the present invention is typically in the range of 40% to 60%, which reflects the fact that the cellulose backbone in the cellulosic material comes from trees or cotton. The material is said to be useful for a vast number of different products. It is especially said that additional examples of articles include disposable knives, forks, spoons, plates, cups, straws as well as eyeglass frames, toothbrush handles, toys, automotive trim, tool handles, camera parts, parts of electronic devices, razor parts, ink pen barrels, disposable syringes, bottles, and the like.

### Summary of invention

It is an object of the invention to addresses environmental issues and to provide as an end product a toothbrush that is easy to use and easy to manufacture.

This object has been achieved by a method and toothbrush handle as defined in the appended independent claims, in particular by a method of manufacturing a toothbrush handle, the method comprising
heating a pelletized polyolefin based polymeric material having a biobased content of at least 80% by weight, and
injection moulding the heated polymeric material into a moulding cavity thereby forming a toothbrush handle, wherein the moulding cavity has the shape of a toothbrush handle comprising a gripping portion and a bristle support portion,
wherein the polyolefin based polymeric material has a flexural modulus of at least 1500 MPa, and
wherein the polyolefin based polymeric material has an impact strength fulfilling at least one of the criteria; having an izod impact strength of at least 40 J/m determined according to standard ASTM D256, and having a notched izod impact strength of at least 20 J/m when determined according to standard ASTM D256.

By using a polyolefin based polymeric material having a biobased content of at least 80% by weight in combination with forming a toothbrush handle having both a gripping portion and a bristle support portion there is provided a design which is both favourable when it comes to addressing environmental issues and when it comes to providing a toothbrush that is comfortable and easy to use. By forming the gripping portion integrally with the bristle support portion there is, compared to the divisible toothbrush, no need to use excessive amounts of material in the gripping portion which otherwise is necessitated due to the fact that there is a need to provide a sufficiently strong connection to the exchangeable bristle supporting portion. In the inventive design, the integral formation of the gripping portion and the bristle supporting portion allows for efficient use of the biobased polyolefin material to provide a toothbrush that is comfortable and easy to use.

The polyolefin based polymeric material has a biobased content of at least 80%, more preferably at least 90% by weight. The polyolefin based polymeric material is preferably a polyethylene based polymeric material. It may be noted that the polyolefin based polymeric material (preferably polyethylene based polymeric material) having a biobased content of at least 80% and most preferably at least 90% by weight will in this disclosure often in short be referred to as the biobased polyolefin material or as the biobased polyethylene material. The bristle supporting portion may also be referred to as a head.

The biobased content may be determined according to standard ASTM D6866 - "Standard Test Methods for Determining the Biobased Content of Solid, Liquid, and Gaseous Samples Using Radiocarbon Analysis".

Polyethylene and other polyolefins are provided in a great variety of in different grades. It has through testing been found that, although the method relates to injection moulding, polyolefin grades and more specifically polyethylene grades recommended for use in injection moulding typically does not provide the properties needed for the toothbrush application. One such property is the flexural modulus, which need to be high enough in order for the bristle support portion to retain the bristles in place. Testing have shown that grades having a flexural modulus of about 1350 results in a too weak retaining force. Acceptable retaining forces are attained at a flexural modulus of about 1500 MPa and it is preferred that the flexural modulus is at least 1550 MPa. Thus, preferably the polyolefin based polymeric material has a flexural modulus of at least 1500 MPa, preferably at least 1550 MPa. The polyolefin material is preferably a polyethylene based polymeric material, and is more preferably a high density polyethylene. The flexural modulus may be determined according to standard ASTM D790 - "Standard Test Methods for Flexural Properties of Unreinforced and Reinforced Plastics and Electrical Insulating Materials" and the given values in MPa relates to the 1% secant.

A sufficient toughness of the material may be indicated by the impact strength of the material. An increased impact strength will provide a greater toughness. The impact strength may be determined according to different methods. It is preferred that the polyolefin based polymeric material or specifically the polyethylene based polymeric material has an impact strength fulfilling at least one of the two criteria; a) having an izod impact strength of at least 40 J/m, preferably at least 60 J/m, and b) having a notched izod impact strength of at least 20 J/m. The izod impact strength and notched izod impact strength may be determined according to standard ASTM D256 - "Standard Test Methods for Determining the Izod Pendulum Impact Resistance of Plastics".

Testing has also shown that in order for the toothbrush retain the bristles, the sufficient flexural modulus should preferably be provided by the polyolefin based material or specifically the polyethylene based polymeric material as such. The polyethylene based polymeric material having the sufficient flexural modulus as such, is typically associated with the polyethylene based polymeric material having comparably long polymeric chains, which in turn is associated with the polyethylene based polymeric material having a great toughness. Testing have shown that if the sufficient flexural modulus is achieved using a polyethylene based polymeric material having a too low flexural modulus and mixing into the polyethylene based polymeric material a modulus enhancing filler material to reach the desired flexural modulus, the resulting material will have a too low toughness; it will be too brittle and the bristles will too easily be torn out from the recesses in the head of the toothbrush. Thus, preferably the polyethylene based polymeric material comprises less than 5%, preferably less than 2%, by weight of flexural modulus enhancing filler material. Examples of flexural modulus enhancing filler material are chalk, fibres, Barium sulphate (BaSO4) and talc.

A sufficient toughness of the material may also be indicated by the melt flow rate of the material. The melt flow rate typically decreases with increasing length of the polymeric chains in a material. Thus, preferably the polyolefin based polymeric material or specifically the polyethylene based polymeric material has a melt flow rate being less than 5 g/10 min, preferably less than 2 g/10min. The melt flow rate may be determined according to standard ASTM D1238 - "Standard Test Method for Melt Flow Rates of Thermoplastics by Extrusion Plastometer" and the given values in g/10min relates to conditions 190/2.16 unless otherwise specified.

The method may further comprise; mixing the polyolefin based polymeric material or specifically the polyethylene based polymeric material with a coloured masterbatch, preferably before the polyolefin based polymeric material or specifically the polyethylene based polymeric material is injection moulded into the moulding cavity, wherein the masterbatch preferably is a pelletised coloured resin. This is a convenient manner of colouring the toothbrush handle. It may be noted that different fractions of the polyolefin based polymeric material or specifically the polyethylene based polymeric material may be mixed with different masterbatches, such as different masterbatches having different colours. This latter may e.g. be used in case the toothbrush handle is to be two-coloured. It may e.g. have a main body moulded from a first mix having a first colour and a second portion, such as a grip portion or the like, moulded onto the main body, the second portion being moulded from a second mix having a second colour. Other differences in properties, apart from colouring, may also be provided via the different masterbatches. Such properties may e.g. be provision of friction enhancing fillers in the masterbatch used for the mix destined for the grip portion.

The masterbatch is preferably provided in an amount of between 0,2 and 8%, more preferably between 0,2 and 4%, by weight of a mix of the masterbatch and the polymeric material. This is a suitable amount of masterbatch capable of providing e.g. sufficient colouring and still not being provided in an excessive amount risking to have a negative influence e.g. on the mechanical properties of the toothbrush handle.

The bristle support portion may be provided with a plurality of recesses each configured to receive a group of bristles, the recesses preferably being formed by a portion of the moulding cavity forming the bristle support portion being provided with a plurality of protrusions extending into the moulding cavity. This is a convenient manner of providing attachment points for the bristles.

A toothbrush handle as disclosed above may be used in a method of manufacturing a toothbrush, the method comprising providing a toothbrush handle and attaching bristles to the bristle support portion by providing a plurality of bristles in groups and attaching respective group of bristles to the bristle support portion by folding the bristles of a group over an anchor element and inserting the anchor element and folded bristles of the group into a recess among a plurality of recesses in the bristle support portion. By using anchor elements, the withdrawal forces the bristles are capable to withstand from being withdrawn from the bristle support portion will be increased. The use of anchor elements is especially useful in cases the flexural modulus is close to the lower limits.

The anchor element may have at least one surface being provided with undulations as seen along a depth direction of the recess in which the anchor element is inserted into. The surface is preferably a main surface facing in a main direction being orthogonal to the depth direction. The undulations will provide a stronger interaction with the walls of the recess and/or the bristles, thereby providing a stronger bristle retaining capability. In a preferred embodiment both opposing main surfaces are provided with undulations as seen along the depth direction.

The above mentioned object has also been achieved by a toothbrush handle comprising a gripping portion and a bristle support portion, the gripping portion and bristle support portion being integrally formed of a polyolefin based polymeric material having a biobased content of at least 80% and most preferably at least 90%, by weight, when determined according to standard ASTM D6866,
wherein the polyolefin based polymeric material has a flexural modulus of at least 1500 MPa, and
wherein the polyolefin based polymeric material has an impact strength fulfilling at least one of the criteria; having an izod impact strength of at least 40 J/m determined according to standard ASTM D256, and having a notched izod impact strength of at least 20 J/m determined according to standard ASTM D256.

By using a polyolefin based polymeric material having a biobased content of at least 80% and most preferably at least 90%, by weight in combination with forming a toothbrush handle having both a gripping portion and a bristle support portion there is provided a design which is both favourable when it comes to addressing environmental issues and when it comes to providing a toothbrush that is comfortable and easy to use. By forming the gripping portion integrally with the bristle support portion there is, compared to the divisible toothbrush, no need to use excessive amounts of material in the gripping portion which otherwise is necessitated due to the fact that there is a need to provide a sufficiently strong connection to the exchangeable bristle supporting portion. In the inventive design, the integral formation of the gripping portion and the bristle supporting portion allows for efficient use of the biobased polyolefin material, and specifically a biobased polyethylene material, to provide a toothbrush that is comfortable and easy to use.

The polyolefin based polymeric material or specifically the polyethylene based polymeric material has a flexural modulus of at least 1500 MPa, preferably at least 1550 MPa. Thereby a sufficient retaining forces is provided.

The polyolefin based polymeric material or specifically the polyethylene based polymeric material has an impact strength fulfilling at least one of the two criteria; having an izod impact strength of at least 40 J/m, preferably at least 60 J/m, and having a notched izod impact strength of at least 20 J/m when determined according to standard ASTM D256. Thereby a sufficient toughness of the material is secured.

Preferred embodiments appear in the dependent claims and in the description. The advantages and considerations associated with respective feature have been discussed above in relation to the manufacturing method and the advantages and considerations are also applicable to the respective feature in the context of the toothbrush handle and toothbrush discussed in the following.

The polyolefin based polymeric material is preferably a polyethylene based polymeric material

The polyolefin based polymeric material or specifically the polyethylene based polymeric material preferably comprises less than 5%, preferably less than 2%, by weight of flexural modulus enhancing filler material.

The polyolefin based polymeric material or specifically the polyethylene based polymeric material preferably has a melt flow rate being less than 5 g/10 min, preferably less than 2 g/10min.

The above mentioned object has also been achieved by a toothbrush comprising a toothbrush handle - which is disclosed in general terms in the disclosure above and which may be further defined by features disclosed in the detailed description - and a plurality of bristles attached to the bristle support portion by providing the plurality of bristles in groups and respective group of bristles being attached to the bristle support portion by the bristles of a group being folded over an anchor element and which anchor element and folded bristles of the group being inserted into a recess among a plurality of recesses in the bristle support portion.

The anchor element preferably has at least one surface being provided with undulations as seen along a depth direction of the recess in which the anchor element is inserted into. The surface is preferably a main surface facing in a main direction being orthogonal to the depth direction. The undulations will provide a stronger interaction with the walls of the recess and/or the bristles, thereby providing a stronger bristle retaining capability. In a preferred embodiment both opposing main surfaces are provided with undulations as seen along the depth direction

Unless otherwise specified, the properties refer to plaque properties of test specimens prepared from compression moulded sheets made according to standard ASTM D4703 - "Standard Practice for Compression Molding Thermoplastic Materials into Test Specimens, Plaques, or Sheets".

It may be noted that the standards referred to may be replaced by other test procedures or standards as long as the measurements performed according to such other test procedures or standards may validly be compared to the measurements performed according to the expressly stated standards.

### Brief description of the drawings

The invention will by way of example be described in more detail with reference to the appended schematic drawings, which shows a presently preferred embodiment of the invention.
Figure 1 is a perspective view of a toothbrush handle.
Figure 2 is an enlargement of a bristle supporting portion, or head, of the toothbrush handle showing a plurality of recesses configured to each receive a group of bristles.
Figure 3 is a view corresponding to figure 2 also showing a group of bristles and an associated anchor element to be inserted into a recess.
Figure 4 is a view corresponding to figure 3 where the bristles are shown to be folded about the anchor element.
Figure 5 is a view corresponding to figures 3 and 4 where the bristles and the anchor element has been inserted into the recess.
Figure 6 is a cross-sectional view along line VI-VI in figure 5.
Figures 7a-d discloses different embodiments of an anchor element.
Figure 8 is a perspective view of a toothbrush.
Figure 9 is a diagram schematically disclosing a method of manufacturing a toothbrush.
Figure 10 schematically discloses a mould which may be used in injection moulding of a toothbrush handle of figure 1.

### Detailed description of preferred embodiments

With reference to figures and 9, the disclosure may generally be said to relate to a method of manufacturing a toothbrush handle 10. The toothbrush handle 10 comprises a grip portion 11 and a bristle support portion 12. The bristle support portion 12 may also be referred to as a head. The toothbrush handle 10 preferably also comprises a neck portion 13 interconnecting the grip portion 11 and bristle support portion 12.

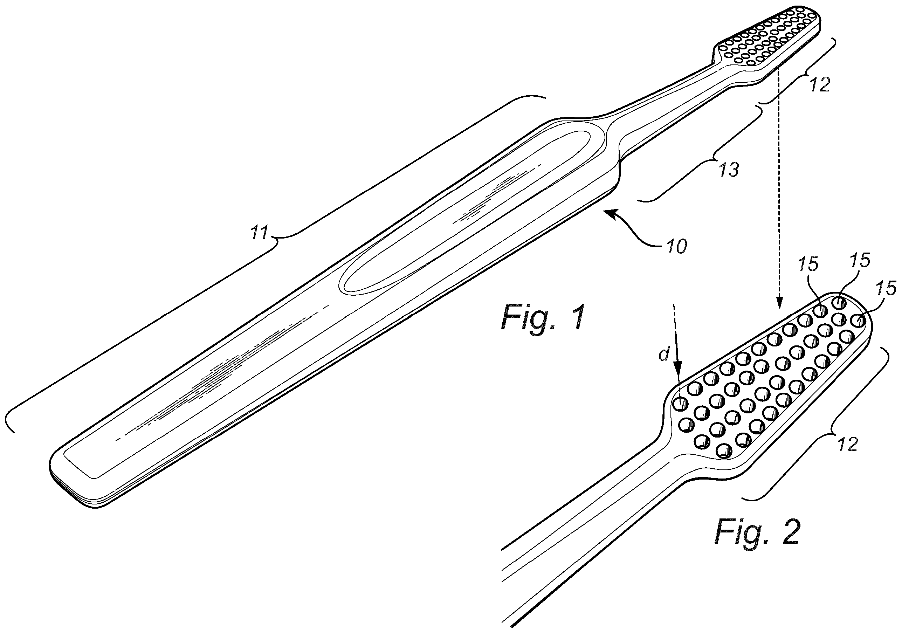

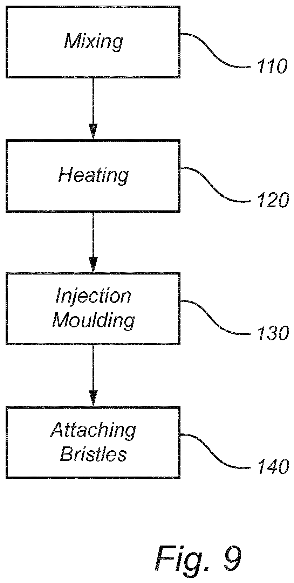

The toothbrush handle 10 of figure 1 is, with reference to figure 9, in short manufactured by heating 120 a pelletized polyolefin based polymeric material, preferably a pelletized polyethylene based polymeric material, having a biobased content of at least 60%, more preferably at least 80% and most preferably at least 90% by weight, and injection moulding 130 the heated polymeric material into a moulding cavity thereby forming a toothbrush handle 10. The moulding cavity has the shape of a toothbrush handle 10 comprising a gripping portion 31, 11 and a bristle support portion 32, 12.

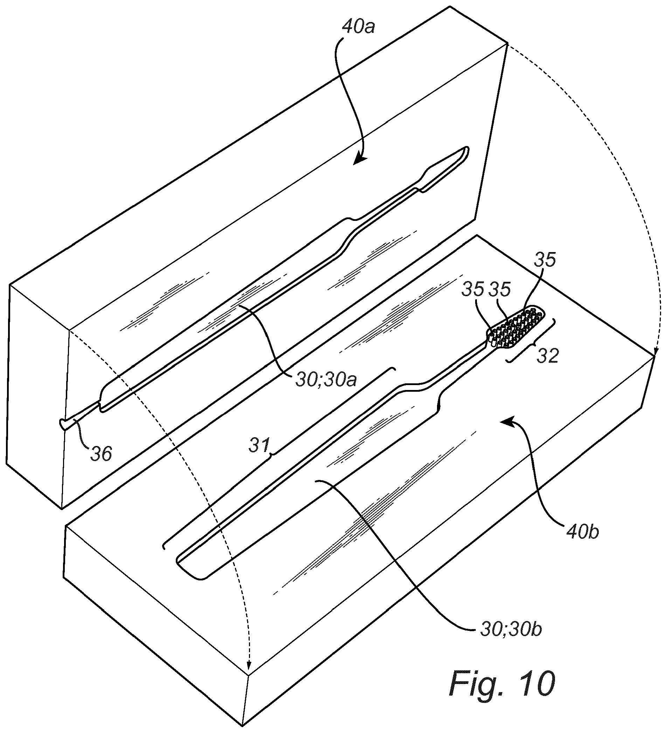

A moulding cavity 30 is schematically shown in figure 10. The moulding cavity 30 is formed of two recesses 30a, 30b; one in each of two mould halves 40a, 40b. The two recesses 30a, 30b together forms the cavity 30 when the mould halves 40a, 40b are clamped together and the mould is closed. The polymeric material is e.g. injected into the moulding cavity 30 the inlet port 36, which may have other positions and designs than that shown in figure 10.

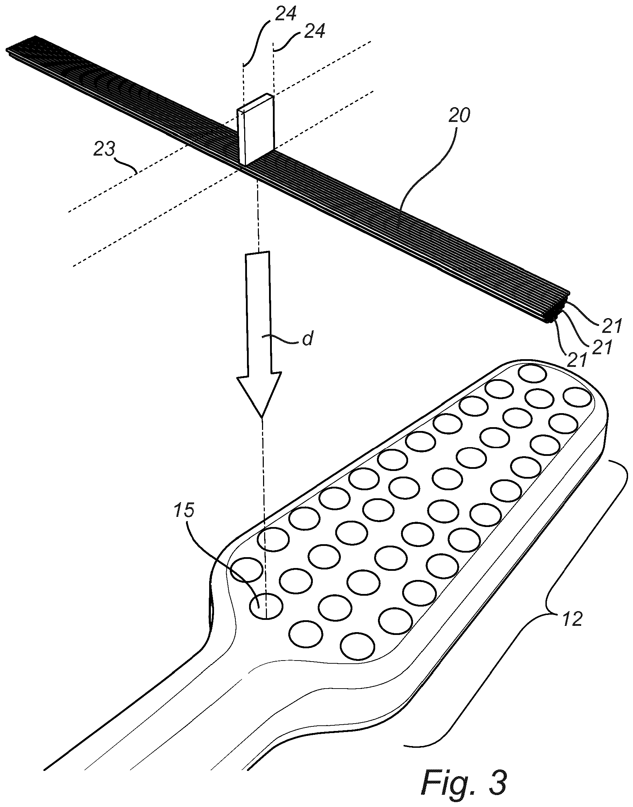

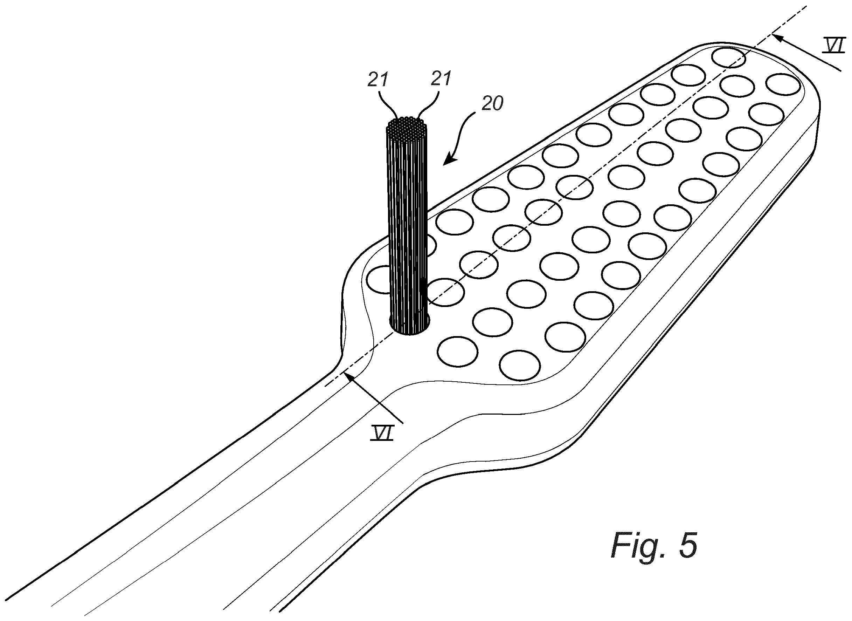

The bristle support portion 12 is, as shown in figures 1 and 2, provided with a plurality of recesses 15. Each recess 15 is configured to receive a group 20 of bristles 21 (as shown in figures 3-6). The recesses 15 are preferably formed by a portion 32 of the moulding cavity 30 intended to form the bristle support portion 12 being provided with a plurality of protrusions 35 extending into the moulding cavity 30 (as shown in figure 10). It may be noted that the moulding halves 40a, 40b schematically disclosed in figure 10 forms a single moulding cavity 30. However, in practice the moulding halves 40a, 40b may be provided with a plurality of recesses 30a, 30b intended to form a plurality of moulding cavities 30 when the halves are clamped together and the mould is closed.

As mentioned above, the polyethylene based polymeric material preferably has a flexural modulus of at least 1500 MPa, preferably at least 1550 MPa. Moreover, the polyethylene based polymeric material preferably comprises less than 5%, preferably less than 2%, by weight of flexural modulus enhancing filler material. The polyethylene based polymeric material preferably has a melt flow rate being less than 5 g/10 min, preferably less than 2 g/10min.The polyethylene based polymeric material preferably has an izod impact strength of at least 40 J/m, preferably at least 60 J/m. The polyethylene material preferably has a notched izod impact strength of at least 20 J/m.

In a preferred embodiment the toothbrush handle is generally formed of a polyethylene based polymeric material having the following properties and characteristics;
high density polyethylene homopolymer,
a biobased content of about 96%,
a flexural modulus (1% secant) of about 1600MPa,
a melt flow rate (190/2.16) of about 0,70 g/10 min,
a melt flow rate (190/21.6) of about 50 g/10 min,
izod impact strength of about 89 J/m.

Such a high density polyethylene homopolymer is especially designed for blow moulding processing and is typically not considered suitable for injection moulding processing (due to its low melt flow rate (a 190/2.16 melt flow rate of about 0,70 g/10 min). Corresponding high-density polyethylenes developed for injection moulding has typically melt flow rates (190/2.16) of about 20 g/10 min. However, such polyethylenes do not have the necessary flexural modulus.

Several tests of different materials and designs of the attachment of the bristles or tufts to the toothbrush handle has been performed.

In the table below the materials tested and their properties are presented.

| Polymer Grade | Flexural Modulus (MPa) | Melt flow rate g/10 min | Impact strength at 23°C |
|---|---|---|---|
| CA | 2400 | 40-56 | 7,0 kJ/m2 (notched, Charpy) |
| | | (230°C/5 kg) | (ISO 179) |
| CAP | 1448 | - | 416 J/m (notched, Izod) = |
| | | | 1139 kJ/m2 (Charpy) |
| PE (A) | 1250 | 20 | 20 J/m (notched, Izod) = |
| | | (190°C/2,16 kg) | 68 kJ/m2 (Charpy) |
| PE (B) | 1350 | 7,2 | 35 J/m (notched, Izod) = |
| | | (190°C/2,16 kg) | 96 kJ/m2 (Charpy) |
| PE (C) | 1600 | 0,7 | 89 J/m (Izod) = |
| | | (190°C/2,16 kg) | 245 kJ/m2 (Charpy) |
| Filled PE (D) | 1270 | 13-16,5 | 3,1 kJ/m2 (notched, Charpy) |
| | | (190°C/2,16 kg) | and 15,4 kJ/m2 (Charpy) |
| | | | (ISO179) |
| Filled PE (E) | 1745 | 17-19 | 2,2 kJ/m2 (notched, Charpy) |
| | | (190°C/2,16 kg) | and 36 kJ/m2 (Charpy) |
| | | | (ISO179) |
| Filled PE (F) | 2620 | 3-4 | 3,5 kJ/m2 (notched, Charpy) |
| | | (190°C/2,16 kg) | and 8 kJ/m2 (Charpy) |
| | | | (ISO179) |

CA is short for Cellulose Acetate. CAP is short for Cellulose Acetate Propionate. PE is short for polyethylene. Three different grades (A, B, C) of unfilled biobased polyethylene has been tested. Three different grades (D, E, F) of filled biobased polyethylene has been tested.

The materials presented in the table below has been tested in different designs of the toothbrush handle. The result of these tests and an evaluation of their overall performance is presented in the table below.

| Polymer Grade | Tuft retention (un-grooved anchor) | Tuft retention (double-sided grooved anchor) | Impact strength | Renewable content |
|---|---|---|---|---|
| CA | Good | Good | Non-acceptable | Moderate |
| CAP | Good | Good | Acceptable | Moderate |
| PE (A) | Non-acceptable | Non-acceptable | Good | High |
| PE (B) | Non-acceptable | Non-acceptable | Good | High |
| **PE (C)** | Acceptable | Acceptable | Good | High |
| PE (D) | Non-acceptable | Non-acceptable | Non-acceptable | High |
| PE (E) | Non-acceptable | Non-acceptable | Non-acceptable | High |
| PE (F) | Non-acceptable | Non-acceptable | Non-acceptable | High |

| | | | | |
|---|---|---|---|---|
| PP/PE | Non-acceptable | Non-acceptable | Non-acceptable | Moderate |

As indicated above, the material denoted PE (C) was found to meet the criteria of being environmentally friendly by having a high renewable content and having the required mechanical properties.

The polyethylene based polymeric material, such as the above disclosed preferred high density polyethylene homopolymer is according to a preferred embodiment mixed with a coloured masterbatch. The masterbatch is preferably provided in an amount of between 0,2 and 8%, preferably between 0,2 and 4%, by weight of a mix of the masterbatch and the polymeric material. The masterbatch is in a preferred embodiment added in an amount of about 1% by weight of the polyethylene based polymeric material. The mixing of the polyethylene based polymeric material with the coloured masterbatch is performed before the polyethylene based polymeric material is injection moulded into the moulding cavity. The mixing may occur before, during or after the heating of the pelletized polyethylene based polymeric material. The masterbatch may e.g. be a pelletised coloured resin. In such a case it may be advantageous to mix the pelletized masterbatch and the pelletized polyethylene based polymeric material before the materials are heated.

In the preferred embodiment, the mixture injection moulded into the moulding cavity has about 0% of flexural of flexural modulus enhancing filler material.

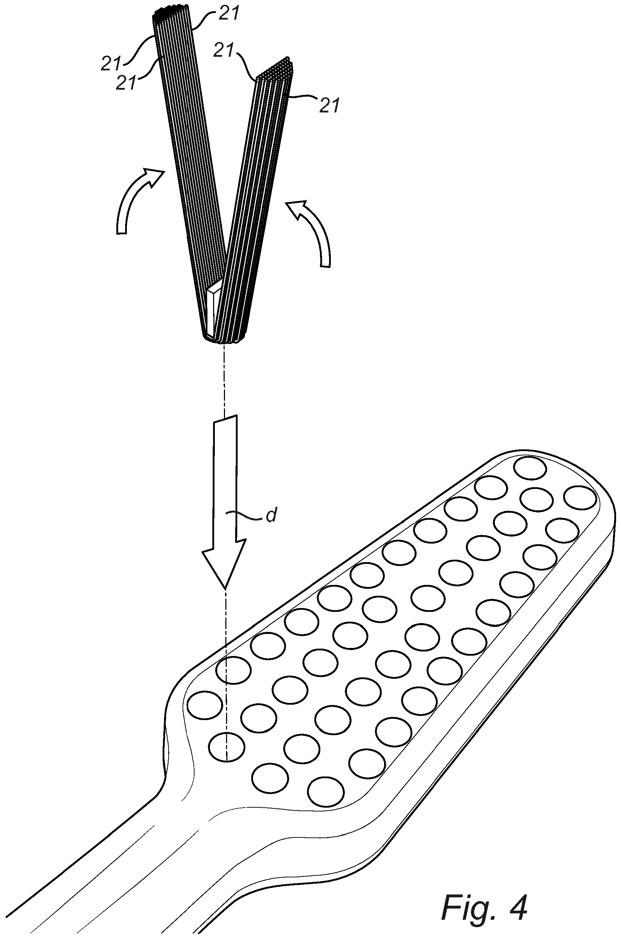

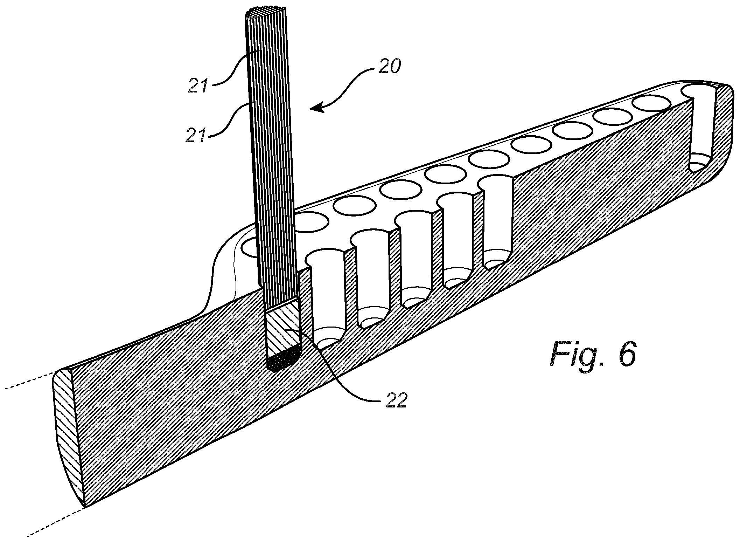

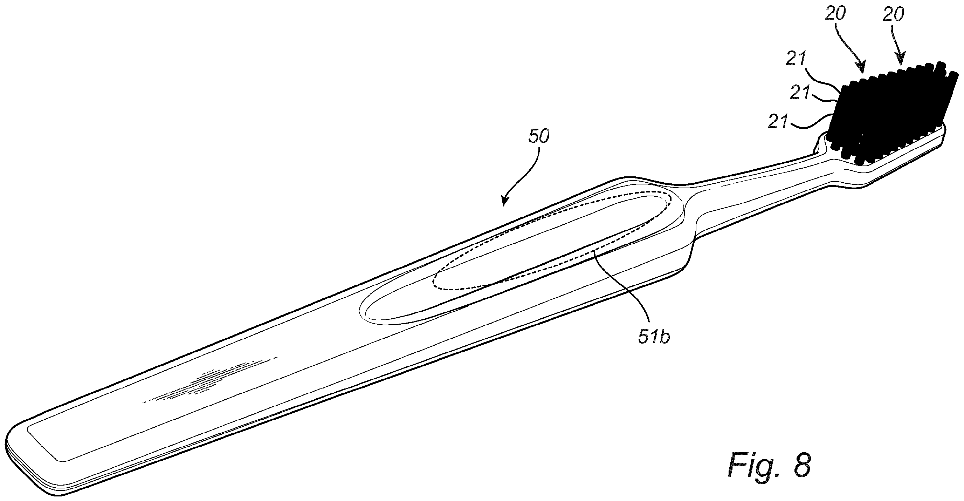

With reference to figure 9 and figures 3-6, the toothbrush handle 10 of figure 1 may be transformed into a toothbrush 50 (as shown in figure 8) by attaching (step 140 in figure 9) bristles 21 to the bristle support portion 12. As shown in figures 3-6, this may be accomplished by providing a plurality of bristles 21 in groups 20 and attaching respective group 20 of bristles 21 to the bristle support portion 12. The bristles 21 of a group 20 are folded over an anchor element 22 (as shown in figure 4) and the anchor element 22 and folded bristles 21 of the group 20 are inserted into a recess 15 among a plurality of recesses 15 in the bristle support portion 12. The operations shown in figures 3-6 are basically formed by providing a group 20 of bristles 21 and then pushing an anchor element 22 into a recess 15 with the group 20 of bristles 21 caught between the anchor element 22 and the bottom and walls of the recess 15 (as indicated in figure 4 and shown in figure 6).

The anchor element 22 may be provided as a long strip being cut into short pieces in connection with the insertion of the anchor element 22 and the group 20 of bristles 21. This is indicated in figure 3, where the extension of the strip 23 is indicated by the dashed lines and the cuts are indicated by the arrows 24.

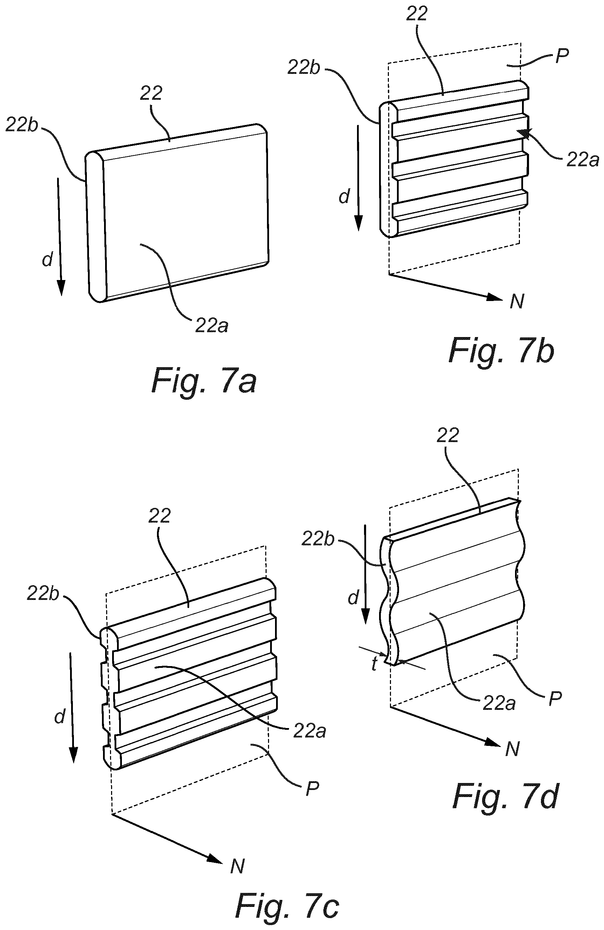

The anchors element 22 may be designed with different cross-sectional shapes. In figures 7a-d there is shown a number of such different cross-sectional shapes. In figure 7a, the anchor element 22 has a cross-sectional shape with two flat major surfaces 22a, 22b. In figure 7b, the anchor element 22 has a cross-sectional shape with one of the major surfaces 22b being flat and the other major surface 22a being provided with undulations or grooves and ridges having varying extension in a normal direction N of a centre plane P of the anchor element 22. The centre plane P may be said to extending along the longitudinal direction of the anchor element 22 (and thus typically also of the strip 23) and along the depth direction d. In figure 7c, the anchor element 22 has a cross-sectional shape with both major surfaces 22a, 22b being provided with undulations or grooves and ridges having varying extension in a normal direction N of a centre plane P of the anchor element 22. In figure 7d, the anchor element 22 has a cross-sectional shape being formed of an undulating piece of material. When following the depth direction d, the position of the material varies along the normal direction N. The thickness t (along the normal direction N) may thereby be the same along the depth direction d and still undulations are provided on both major surfaces.

The anchor element 22 has preferably at least one surface being provided with undulations as seen along a depth direction d of the recess 15 in which the anchor element 22 is inserted into. Preferably the anchor element 22 has two major surfaces being provided with undulations as seen along the depth direction of the recess 15 in which the anchor element 22 is inserted into.

The result of the manufacturing process disclosed above is a toothbrush handle 10 comprising a gripping portion 11 and a bristle support portion 12. The gripping portion 11 and bristle support portion 12 are integrally formed of a polyethylene based polymeric material having a biobased content of at least 90% by weight. In the embodiment disclosed in figure 1, there is neck portion 13 in between the gripping portion 11 and the bristle support portion 12. The gripping portion 11, the neck portion 13 and the bristle support portion 12 are integrally formed of a polyethylene based polymeric material having a biobased content of at least 90% by weight. The polyethylene based polymeric material has preferably a flexural modulus of at least 1500 MPa, preferably at least 1550 MPa. In the preferred embodiment of the toothbrush handle 10, the polyethylene based polymeric material has a flexural modulus (1% secant) of about 1600MPa. The polyethylene based polymeric material comprises less than 5%, preferably less than 2%, by weight of flexural modulus enhancing filler material. In the preferred embodiment of the tooth brush handle 10, the polyethylene based polymeric material comprises about 0% flexural modulus enhancing filler material. The polyethylene based polymeric material preferably has a melt flow rate being less than 5 g/10 min, preferably less than 2 g/10min. In the preferred embodiment of the toothbrush handle 10, the polyethylene based polymeric material has a melt flow rate being about 0,7 g/10 min. As mentioned above, such a toothbrush handle 10 (as shown in figure 1) is transformed into a toothbrush 50 (as shown in figure 8) by attaching bristles 21 to the bristle support portion 12. As shown in figure 8, there is inserted a group 20 of bristles 21 in each recess 15 of the bristle support portion 12. Each group 20 of bristles 21 is preferably folded about an anchor element 22 and inserted into the respective recess 15 together with the anchor element 22.

It is contemplated that there are numerous modifications of the embodiments described herein, which are still within the scope of the invention as defined by the appended claims.

The toothbrush handle may for instance be designed with a grip improving portion 51b generally indicated by dashed lines in figure 8.

The bristle supporting portion 12 may for instance comprise bristles 21 of different kinds, sizes, orientations, etc. rather than the uniform design shown in the preferred embodiment.

## Claims

1. A method of manufacturing a toothbrush handle (10), the method comprising:
heating (120) a pelletized polyolefin based polymeric material having a biobased content of at least 80% by weight when determined according to standard ASTM D6866, and
injection moulding (130) the heated polymeric material into a moulding cavity (30) thereby forming a toothbrush handle (10), wherein the moulding cavity (30) has the shape of a toothbrush handle (10) comprising a gripping portion (11, 31) and a bristle support portion (12, 32),
wherein the polyolefin based polymeric material has a flexural modulus of at least 1500 MPa, and
wherein the polyolefin based polymeric material has an impact strength fulfilling at least one of the criteria; having an izod impact strength of at least 40 J/m determined according to standard ASTM D256, and having a notched izod impact strength of at least 20 J/m when determined according to standard ASTM D256.

2. The method according to claim 1, wherein the polyolefin based polymeric material has a flexural modulus of at least 1550 MPa.

3. The method according to claim 1 or 2, wherein the polyolefin based polymeric material comprises less than 5%, preferably less than 2%, by weight of flexural modulus enhancing filler material.

4. The method according to any one of claims 1-3, wherein the polyolefin based polymeric material has a biobased content of at least 90% by weight.

5. The method according to any one of claims 1-4, wherein the polyolefin based polymeric material is a polyethylene based polymeric material.

6. The method according to any one of claims 1-5, wherein the polyolefin based polymeric material has a melt flow rate being less than 5 g/10 min, preferably less than 2 g/10min, when determined according to standard ASTM D1238 under conditions 190/2.16.

7. The method according to any one of claims 1-6, wherein the polyolefin based polymeric material has an impact strength fulfilling at least one of the criteria; having an izod impact strength of at least 60 J/m determined according to standard ASTM D256 and having a notched izod impact strength of at least 20 J/m determined according to standard ASTM D256.

8. The method according to any one of claims 1-7, the method further comprising mixing (110) the polyolefin based polymeric material with a coloured masterbatch, preferably before the polyolefin based polymeric material is injection moulded into the moulding cavity, wherein the masterbatch preferably is a pelletised coloured resin.

9. The method according to claim 8, wherein the masterbatch is provided in an amount of between 0,2 and 8%, preferably between 0,2 and 4%, by weight of a mix of the masterbatch and the polymeric material.

10. The method according to any one of claims 1-9, wherein the bristle support portion (12) is provided with a plurality of recesses (15) each configured to receive a group (20) of bristles (21), the recesses (15) preferably being formed by a portion (32) of the moulding cavity (30) forming the bristle support portion (12) being provided with a plurality of protrusions (35) extending into the moulding cavity (30).

11. The method of manufacturing a toothbrush, the method comprising providing a toothbrush handle (10) according to the method of any one of claims 1-10, the method further comprising attaching bristles (21) to the bristle support portion (12) by providing a plurality of bristles (21) in groups (20) and attaching respective group (20) of bristles (21) to the bristle support portion (12) by folding the bristles (21) of a group (20) over an anchor element (22) and inserting the anchor element (22) and folded bristles (21) of the group (20) into a recess (15) among a plurality of recesses (15) in the bristle support portion (12).

12. The method according to claim 11, wherein the anchor element (22) has at least one surface (22a, 22b) being provided with undulations as seen along a depth direction (d) of the recess (15) in which the anchor element (22) is inserted into.

13. A toothbrush handle comprising a gripping portion (11) and a bristle support portion (12), the gripping portion (11) and bristle support portion (12) being integrally formed of a polyolefin based polymeric material having a biobased content of at least 80% by weight when determined according to standard ASTM D6866,
wherein the polyolefin based polymeric material has a flexural modulus of at least 1500 MPa, and
wherein the polyolefin based polymeric material has an impact strength fulfilling at least one of the criteria; having an izod impact strength of at least 40 J/m determined according to standard ASTM D256, and having a notched izod impact strength of at least 20 J/m when determined according to standard ASTM D256.

14. The toothbrush handle according to claim 13, wherein the polyolefin based polymeric material has a flexural modulus of at least 1550 MPa.

15. The toothbrush handle according to claim 13 or 14, wherein the polyolefin based polymeric material comprises less than 5%, preferably less than 2%, by weight of flexural modulus enhancing filler material.

16. The toothbrush handle according to any one of claims 13-15,
wherein the polyolefin based polymeric material has a melt flow rate being less than 5 g/10 min, preferably less than 2 g/10min, when determined according to standard ASTM D1238 under conditions 190/2.16.

17. The tooth brush handle according to any one of claims 13-16,
wherein the polyolefin based polymeric material has an impact strength fulfilling at least one of the criteria; having an izod impact strength of at least 60 J/m determined according to standard ASTM D256 and having a notched izod impact strength of at least 20 J/m determined according to standard ASTM D256.

18. The tooth brush handle according to any one of claims 13-17,
wherein the polyolefin based polymeric material is a polyethylene based polymeric material.

19. A toothbrush comprising:
a toothbrush handle (10) according to any one of claims 13-18, and
a plurality of bristles (21) attached to the bristle support portion (12) by providing the plurality of bristles (21) in groups (20) and respective group (20) of bristles (21) being attached to the bristle support portion (12) by the bristles (21) of a group (20) being folded over an anchor element (22) and which anchor element (22) and folded bristles (21) of the group (20) being inserted into a recess (15) among a plurality of recesses (15) in the bristle support portion (12), wherein the anchor element (22) preferably has at least one surface (22a, 22b) being provided with undulations as seen along a depth direction (d) of the recess (15) in which the anchor element (22) is inserted into.

## Patentansprüche

1. Verfahren zur Herstellung eines Zahnbürstengriffs (10), wobei das Verfahren umfasst:
Erwärmen (120) eines pelletierten Polymermaterials auf Polyolefinbasis mit einem biobasierten Gehalt von mindestens 80 Gew.-%, wenn gemäß der Norm ASTM D6866 bestimmt, und
Spritzgießen (130) des erwärmten Polymermaterials in einen Formhohlraum (30), wodurch ein Zahnbürstengriff (10) gebildet wird, wobei der Formhohlraum (30) die Form eines Zahnbürstengriffs (10) aufweist, der einen Greifabschnitt (11, 31) und einen Borstenstützabschnitt (12, 32) umfasst, wobei das Polymermaterial auf Polyolefinbasis einen Biegemodul von mindestens 1500 MPa aufweist, und
wobei das Polymermaterial auf Polyolefinbasis eine Schlagzähigkeit aufweist, die mindestens eines der Kriterien erfüllt; mit einer gemäß der Norm ASTM D256 bestimmten Kerbschlagzähigkeit von mindestens 40 J/m und mit einer gemäß der Norm ASTM D256 bestimmten Kerbschlagzähigkeit von mindestens 20 J/m.

2. Verfahren nach Anspruch 1, wobei das Polymermaterial auf Polyolefinbasis einen Biegemodul von mindestens 1550 MPa aufweist.

3. Verfahren nach Anspruch 1 oder 2, wobei das Polymermaterial auf Polyolefinbasis weniger als 5 Gew.-%, vorzugsweise weniger als 2 Gew.-% biegemodulverstärkendes Füllmaterial umfasst.

4. Verfahren nach einem der Ansprüche 1-3, wobei das Polymermaterial auf Polyolefinbasis einen biobasierten Gehalt von mindestens 90 Gew.-% aufweist.

5. Verfahren nach einem der Ansprüche 1-4, wobei das Polymermaterial auf Polyolefinbasis ein Polymermaterial auf Polyethylenbasis ist.

6. Verfahren nach einem der Ansprüche 1-5, wobei das Polymermaterial auf Polyolefinbasis eine Schmelzflussrate von weniger als 5 g/10 min, vorzugsweise weniger als 2 g/10 min, aufweist, wenn gemäß der Norm ASTM D1238 unter den Bedingungen 190/216 bestimmt.

7. Verfahren nach einem der Ansprüche 1-6, wobei das Polymermaterial auf Polyolefinbasis eine Schlagzähigkeit aufweist, die mindestens eines der Kriterien erfüllt; mit einer gemäß der Norm ASTM D256 bestimmten Kerbschlagzähigkeit von mindestens 60 J/m und mit einer gemäß der Norm ASTM D256 bestimmten Kerbschlagzähigkeit von mindestens 20 J/m.

8. Verfahren nach einem der Ansprüche 1-7, wobei das Verfahren ferner das Mischen (110) des Polymermaterials auf Polyolefinbasis mit einem gefärbten Masterbatch umfasst, vorzugsweise bevor das Polymermaterial auf Polyolefinbasis in den Formhohlraum spritzgegossen wird, wobei der Masterbatch vorzugsweise ein pelletisiertes gefärbtes Harz ist.

9. Verfahren nach Anspruch 8, wobei der Masterbatch in einer Menge zwischen 0,2 und 8 Gew.-%, vorzugsweise zwischen 0,2 und 4 Gew.-% einer Mischung aus dem Masterbatch und dem Polymermaterial bereitgestellt wird.

10. Verfahren nach einem der Ansprüche 1-9, wobei der Borstenstützabschnitt (12) mit einer Mehrzahl von Aussparungen (15) versehen ist, die jeweils konfiguriert sind, um eine Gruppe (20) von Borsten (21) aufzunehmen, wobei die Aussparungen (15) vorzugsweise durch einen Abschnitt (32) des Formhohlraums (30) gebildet werden, der den Borstenstützabschnitt (12) bildet, der mit einer Mehrzahl von Vorsprüngen (35) versehen ist, die sich in den Formhohlraum (30) erstrecken.

11. Verfahren zur Herstellung einer Zahnbürste, wobei das Verfahren das Bereitstellen eines Zahnbürstengriffs (10) nach dem Verfahren nach einem der Ansprüche 1-10 umfasst, wobei das Verfahren ferner das Anbringen von Borsten (21) an dem Borstenstützabschnitt (12) durch Bereitstellen einer Mehrzahl von Borsten (21) in Gruppen (20) und das Anbringen einer jeweiligen Gruppe (20) von Borsten (21) an dem Borstenstützabschnitt (12) durch Falten der Borsten (21) einer Gruppe (20) über ein Ankerelement (22) und das Einsetzen des Ankerelements (22) und gefalteter Borsten (21) der Gruppe (20) in eine Aussparung (15) unter einer Mehrzahl von Aussparungen (15) in dem Borstenstützabschnitt (12) umfasst.

12. Verfahren nach Anspruch 11, wobei das Ankerelement (22) mindestens eine Oberfläche (22a, 22b) aufweist, die mit Wellungen versehen ist, gesehen entlang einer Tiefenrichtung (d) der Aussparung (15), in die das Ankerelement (22) eingesetzt ist.

13. Zahnbürstengriff, umfassend einen Greifabschnitt (11) und einen Borstenstützabschnitt (12), wobei der Greifabschnitt (11) und der Borstenstützabschnitt (12) einstückig aus einem Polymermaterial auf Polyolefinbasis mit einem biobasierten Gehalt von mindestens 80 Gew.-% gebildet sind, wenn gemäß der Norm ASTM D6866 bestimmt,
wobei das Polymermaterial auf Polyolefinbasis einen Biegemodul von mindestens 1500 MPa aufweist, und
wobei das Polymermaterial auf Polyolefinbasis eine Schlagzähigkeit aufweist, die mindestens eines der Kriterien erfüllt; mit einer gemäß der Norm ASTM D256 bestimmten Kerbschlagzähigkeit von mindestens 40 J/m und mit einer gemäß der Norm ASTM D256 bestimmten Kerbschlagzähigkeit von mindestens 20 J/m.

14. Zahnbürstengriff nach Anspruch 13, wobei das Polymermaterial auf Polyolefinbasis einen Biegemodul von mindestens 1550 MPa aufweist.

15. Zahnbürstengriff nach Anspruch 13 oder 14, wobei das Polymermaterial auf Polyolefinbasis weniger als 5 Gew.-%, vorzugsweise weniger als 2 Gew.-% biegemodulverstärkendes Füllmaterial umfasst.

16. Zahnbürstengriff nach einem der Ansprüche 13-15, wobei das Polymermaterial auf Polyolefinbasis eine Schmelzflussrate von weniger als 5 g/10 min, vorzugsweise weniger als 2 g/10 min, aufweist, wenn gemäß der Norm ASTM D1238 unter den Bedingungen 190/216 bestimmt.

17. Zahnbürstengriff nach einem der Ansprüche 13-16, wobei das Polymermaterial auf Polyolefinbasis eine Schlagzähigkeit aufweist, die mindestens eines der Kriterien erfüllt; mit einer gemäß der Norm ASTM D256 bestimmten Kerbschlagzähigkeit von mindestens 6 J/m und mit einer gemäß der Norm ASTM D256 bestimmten Kerbschlagzähigkeit von mindestens 20 J/m.

18. Zahnbürstengriff nach einem der Ansprüche 13-17, wobei das Polymermaterial auf Polyolefinbasis ein Polymermaterial auf Polyethylenbasis ist.

19. Zahnbürste, umfassend:
einen Zahnbürstengriff (10) nach einem der Ansprüche 13-18, und
eine Mehrzahl von Borsten (21), die an dem Borstenstützabschnitt (12) angebracht sind, indem die Mehrzahl von Borsten (21) in Gruppen (20) bereitgestellt wird und eine jeweilige Gruppe (20) von Borsten (21) an dem Borstenstützabschnitt (12) angebracht wird, indem die Borsten (21) einer Gruppe (20) über ein Ankerelement (22) gefaltet werden und das Ankerelement (22) und gefaltete Borsten (21) der Gruppe (20) in eine Aussparung (15) unter einer Mehrzahl von Aussparungen (15) in dem Borstenstützabschnitt (12) eingesetzt werden, wobei das Ankerelement (22) vorzugsweise mindestens eine Oberfläche (22a, 22b) aufweist, die mit Wellungen versehen ist, gesehen entlang einer Tiefenrichtung (d) der Aussparung (15), in die das Ankerelement (22) eingesetzt ist.

## Revendications

1. Procédé de fabrication d'un manche de brosse à dents (10), le procédé comprenant :
Le chauffage (120) d'un matériau polymère à base de polyoléfine en granulés ayant une teneur d'origine biologique d'au moins 80 % en poids lorsqu'elle est déterminée selon la norme ASTM D6866, et
le moulage par injection (130) du matériau polymère chauffé dans une cavité de moulage (30) en formant ainsi un manche de brosse à dents (10), dans lequel la cavité de moulage (30) possède la forme d'un manche de brosse à dents (10) comprenant une partie de préhension (11, 31) et une partie de support de poils (12, 32),
dans lequel le matériau polymère à base de polyoléfine possède un module de flexion d'au moins 1500 MPa, et
dans lequel le matériau polymère à base de polyoléfine possède une résistance aux chocs satisfaisant au moins l'un des critères ; ayant une résistance aux chocs Izod d'au moins 40 J/m déterminée selon la norme ASTM D256, et ayant une résistance aux chocs Izod sur barreau entaillé d'au moins 20 J/m lorsqu'elle est déterminée selon la norme ASTM D256.

2. Procédé selon la revendication 1, dans lequel le matériau polymère à base de polyoléfine possède un module de flexion d'au moins 1550 MPa.

3. Procédé selon la revendication 1 ou 2, dans lequel le matériau polymère à base de polyoléfine comprend moins de 5 %, de préférence moins de 2 %, en poids de matériau de charge améliorant le module de flexion.

4. Procédé selon l'une quelconque des revendications 1 à 3, dans lequel le matériau polymère à base de polyoléfine possède une teneur d'origine biologique d'au moins 90 % en poids.

5. Procédé selon l'une quelconque des revendications 1 à 4, dans lequel le matériau polymère à base de polyoléfine est un matériau polymère à base de polyéthylène.

6. Procédé selon l'une quelconque des revendications 1 à 5, dans lequel le matériau polymère à base de polyoléfine possède un indice de fluidité à chaud qui est inférieur à 5 g/10 min, de préférence inférieur à 2 g/10 min, lorsqu'il est déterminé selon la norme ASTM D1238 sous les conditions 190/2.16.

7. Procédé selon l'une quelconque des revendications 1 à 6, dans lequel le matériau polymère à base de polyoléfine possède une résistance aux chocs satisfaisant au moins l'un des critères ; ayant une résistance aux chocs Izod d'au moins 60 J/m déterminée selon la norme ASTM D256 et ayant une résistance aux chocs Izod sur barreau entaillé d'au moins 20 J/m déterminée selon la norme ASTM D256.

8. Procédé selon l'une quelconque des revendications 1 à 7, le procédé comprenant en outre le mélange (110) du matériau polymère à base de polyoléfine avec un mélange maître coloré, de préférence avant que le matériau polymère à base de polyoléfine soit moulé par injection dans la cavité de moulage, dans lequel le mélange maître est de préférence une résine colorée en granulés .

9. Procédé selon la revendication 8, dans lequel le mélange maître est fourni dans une quantité d'entre 0,2 et 8 %, de préférence entre 0,2 et 4 %, en poids d'un mélange du mélange maître et du matériau polymère.

10. Procédé selon l'une quelconque des revendications 1 à 9, dans lequel la partie de support de poils (12) est munie d'une pluralité d'évidements (15) configurés chacun pour recevoir un groupe (20) de poils (21), les évidements (15) étant de préférence formés par une partie (32) de la cavité de moulage (30) formant la partie de support de poils (12) qui est munie d'une pluralité de saillies (35) s'étendant dans la cavité de moulage (30).

11. Procédé de fabrication d'une brosse à dents, le procédé comprenant la fourniture d'un manche de brosse à dents (10) selon le procédé de l'une quelconque des revendications 1 à 10, le procédé comprenant en outre la fixation de poils (21) à la partie de support de poils (12) par la fourniture d'une pluralité de poils (21) en groupes (20) et la fixation d'un groupe (20) respectif de poils (21) à la partie de support de poils (12) par le repliement des poils (21) d'un groupe (20) par-dessus un élément d'ancrage (22) et l'insertion de l'élément d'ancrage (22) et des poils repliés (21) du groupe (20) dans un évidement (15) parmi une pluralité d'évidements (15) dans la partie de support de poils (12).

12. Procédé selon la revendication 11, dans lequel l'élément d'ancrage (22) possède au moins une surface (22a, 22b) qui est munie d'ondulations telles qu'observées le long d'une direction de profondeur (d) de l'évidement (15) dans lequel l'élément d'ancrage (22) est inséré.

13. Manche de brosse à dents comprenant une partie de préhension (11) et une partie de support de poils (12), la partie de préhension (11) et la partie de support de poils (12) étant formées d'un seul tenant d'un matériau polymère à base de polyoléfine ayant une teneur d'origine biologique d'au moins 80 % en poids lorsqu'elle est déterminée selon la norme ASTM D6866,
dans lequel le matériau polymère à base de polyoléfine possède un module de flexion d'au moins 1500 MPa, et
dans lequel le matériau polymère à base de polyoléfine possède une résistance aux chocs satisfaisant au moins l'un des critères ; ayant une résistance aux chocs Izod d'au moins 40 J/m déterminée selon la norme ASTM D256, et ayant une résistance aux chocs Izod sur barreau entaillé d'au moins 20 J/m lorsqu'elle est déterminée selon la norme ASTM D256.

14. Manche de brosse à dents selon la revendication 13, dans lequel le matériau polymère à base de polyoléfine possède un module de flexion d'au moins 1550 MPa.

15. Manche de brosse à dents selon la revendication 13 ou 14, dans lequel le matériau polymère à base de polyoléfine comprend moins de 5 %, de préférence moins de 2 %, en poids de matériau de charge améliorant le module de flexion.

16. Manche de brosse à dents selon l'une quelconque des revendications 13 à 15, dans lequel le matériau polymère à base de polyoléfine possède un indice de fluidité à chaud qui est inférieur à 5 g/10 min, de préférence inférieur à 2 g/10 min, lorsqu'il est déterminé selon la norme ASTM D1238 sous les conditions 190/2.16.

17. Manche de brosse à dents selon l'une quelconque des revendications 13 à 16, dans lequel le matériau polymère à base de polyoléfine possède une résistance aux chocs satisfaisant au moins l'un des critères ; ayant une résistance aux chocs Izod d'au moins 60 J/m déterminée selon la norme ASTM D256 et ayant une résistance aux chocs Izod sur barreau entaillé d'au moins 20 J/m déterminée selon la norme ASTM D256.

18. Manche de brosse à dents selon l'une quelconque des revendications 13 à 17, dans lequel le matériau polymère à base de polyoléfine est un matériau polymère à base de polyéthylène.

19. Brosse à dents comprenant :
un manche de brosse à dents (10) selon l'une quelconque des revendications 13 à 18, et
une pluralité de poils (21) fixés à la partie de support de poils (12) par la fourniture de la pluralité de poils (21) en groupes (20) et un groupe (20) respectif de poils (21) étant fixé à la partie de support de poils (12) par le fait que les poils (21) d'un groupe (20) sont repliés par-dessus un élément d'ancrage (22) et que lesquels élément d'ancrage (22) et poils repliés (21) du groupe (20) sont insérés dans un évidement (15) parmi une pluralité d'évidements (15) dans la partie de support de poils (12), dans lequel l'élément d'ancrage (22) possède de préférence au moins une surface (22a, 22b) qui est munie d'ondulations telles qu'observées le long d'une direction de profondeur (d) de l'évidement (15) dans lequel l'élément d'ancrage (22) est inséré.
